Europäisches Patentamt

European Patent Office

Office européen des brevets

(11) Numéro de publication : **0 300 538 B1**

(12)  # FASCICULE DE BREVET EUROPEEN

(45) Date de publication du fascicule du brevet :
04.12.91 Bulletin 91/49

(51) Int. Cl.⁵ : **B60B 7/06**

(21) Numéro de dépôt : **88201399.8**

(22) Date de dépôt : **05.07.88**

(54) **Système pour la fixation positive à la jante d'une roue, pour un disque enjoliveur pour roue de véhicule industriel.**

(30) Priorité : 23.07.87 IT 6764187

(43) Date de publication de la demande :
25.01.89 Bulletin 89/04

(45) Mention de la délivrance du brevet :
04.12.91 Bulletin 91/49

(84) Etats contractants désignés :
BE CH DE ES FR GB LI NL SE

(56) Documents cités :
DE-A- 2 629 291
DE-U- 7 632 702
FR-A- 2 166 017
US-A- 2 631 895

(73) Titulaire : RUSPA s.r.l.
Via C. Colombo 2
I-10070 Robassomero (IT)

(72) Inventeur : Ruspa, Renzo
Rotta Magnabergera 8
I-10070 Fiano (TO) (IT)

(74) Mandataire : Patrito, Pier Franco, Dr. Ing.
Cabinet PATRITO BREVETTI Via Don Minzoni 14
I-10121 Torino (IT)

## Description

La présente invention se réfère à un système pour la fixation positive d'un disque enjoliveur à la jante d'une roue laquelle se termine extérieurement par un bord concave en canal, comprenant au moins trois dispositifs de connexion, disposés le long de la périphérie de l'enjoliveur pour engager le bord concave en canal de la jante, au moins un de ces dispositifs de connexion étant mobile et comportant un organe d'engagement ayant une saillie susceptible d'être déplacée entre une position de montage, dans laquelle elle peut être enfilée à l'intérieur dudit bord en canal pour permettre le montage de l'enjoliveur sur la roue, et une position de fixation, dans laquelle elle engage ledit bord en canal pour lui fixer positivement l'enjoliveur, et des moyens pour déplacer ledit organe d'engagement entre la position de montage et la position de fixation et vice-versa.

En maintes cas, spécialement pour des véhicules légers, les disques enjoliveurs peuvent être appliqués aux roues par des dispositifs de fixation à enclanchement élastique disposés de sorte à engager des contre-dépouilles présentées par les jantes des roues, mais en d'autres cas, spécialement pour des véhicules lourds, généralement des véhicules industriels, on exige que la fixation des enjoliveurs sur les roues soit positive. Dans ces cas on fait recours, d'habitude, à des étriers spéciaux qui sont serrés sous les boulons de fixation des roues et qui sont pourvus de moyens pour recevoir, à leur tour, la fixation des enjoliveurs. Toutefois ces systèmes ne sont pas satisfaisants, d'un côté parce qu'il portent à une complication indésirable des opérations de montage et de démontage des roues, lesquelles en ce cas intéressent aussi les étriers de support des enjoliveurs, et d'autre côté parce que les moyens de fixation des roues dans les différents véhicules montrent de nombreuses configurations différentes, et donc, pour l'application des disques enjoliveurs, l'on doit fabriquer et emmagasinner de nombreux assortiments d'étriers différents, entre lesquels il faut faire un choix lors de l'application des enjoliveurs, avec la possibilité d'erreurs.

Le document DE-A-2.629.291 décrit un système suivant le préambule, dans lequel les dispositifs de connexion font partie de l'enjoliveur lui-même, les organes d'engagement mobiles étant tourillonnés sur des aubes de l'enjoliveur et les moyens pour les déplacer étant constitués par des vis de pression vissées dans la paroi frontale de l'enjoliveur. Ces caractéristiques comportent, d'un côté, que les dispositifs de connexion doivent être prédisposés sur chaque enjoliveur, et d'autre côté que la forme de l'enjoliveur est considérablement conditionnée par les dispositifs de connexion et, surtout, que l'enjoliveur lui-même doit être réalisé en forme massive, en pratique en alliage moulé, parce qu'il doit être capable de supporter le tourillon des organes d'engagement et le vissage de la vis de pression. Ce système est donc coûteux, peu versatile et, surtout, il ne pourrait pas être appliqué sur les enjoliveurs en mince tôle d'acier inoxidable, qui sont les plus demandés à présent.

Le but de la présente invention est de rationaliser les dispositifs de fixation positive des disques enjoliveurs pour roues, de sorte à surmonter les inconvénients indiqués, et plus particulièrement de surmonter les inconvénients du système traditionnel sans encourir les limitations propres du système suivant le document cité.

Ce but est atteint, suivant l'invention, en ce que chaque dispositif de connexion mobile comporte un organe de support, constructivement séparé de l'enjoliveur et pourvu de moyens pour sa fixation au bord de l'enjoliveur, ledit organe d'engagement étant supporté par ledit organe de support, et en ce que lesdits moyens pour déplacer l'organe d'engagement comportent une vis de traction montée dans l'organe de support et un écrou solidaire de l'organe d'engagement.

Grâce à cette disposition le disque enjoliveur, disposé au préalable avec ses dispositifs de connexion mobiles dans la configuration de montage, peut être appliqué à une roue en enfilant à l'intérieur du bord en canal les organes d'engagement des dispositifs de connexion, après quoi ces derniers peuvent être manoeuvrés de sorte à déplacer de la position de montage à la position de fixation leurs organes d'engagement, lesquels alors engagent le bord concave en canal de la roue, ainsi complétant la fixation positive de l'enjoliveur. De cette façon, les dispositifs de fixation de l'enjoliveur n'ont aucune relation avec les moyens de fixation de la roue, dont la configuration est donc indifférente, et un enjoliveur pourvu du système de fixation suivant l'invention peut être appliqué à toute roue ayant le diamètre pour lequel l'enjoliveur est projeté, pourvu que cette roue montre ledit bord en canal comme, d'autre part, est d'habitude en général pour les roues actuellement fabriquées, destinées à des véhicules industriels. La production et l'emmagasinage d'étriers spéciaux pour l'application de l'enjoliveur aux roues des différents types de véhicules sont entièrement évités, ainsi que le choix opportun de tout moyen d'adaptation de l'enjoliveur lors de son installation. De leur côté, le montage et le démontage de la roue sont effectués sans interférer d'aucune façon avec des organes destinés à permettre le montage du disque enjoliveur.

D'autre part, les organes de connexion sont en soi indépendants de l'enjoliveur et sont seulement fixés à son bord, donc ils ne limitent aucunement la conformation de l'enjoliveur, et celui-ci peut être réalisé en toute matière, ne devant supporter aucun effort. En particulier, les efforts concentrés venant du vissage de la vis de traction sont supportés par un écrou, ce qui autorise une construction en moulage de matière plastique des parties principales des organes de connexion. Enfin, les organes de connexion étant indépendants des enjoliveurs, ils peuvent être fabriqués en une forme standardisée qu'on peut utiliser pour tout diamètre et tout dessin d'enjoliveur.

Ces caractéristiques et d'autres et les avantages de l'objet de l'invention ressortiront plus clairement de la suivante description d'une forme de réalisation, donnée à titre d'exemple non limitatif et schématiquement représentée dans les dessins annexés, dans lesquels :

Fig. 1 montre en vue de front et en petite échelle un disque enjoliveur pour roue, pourvu du système de fixation suivant l'invention ;

Fig. 2 en montre une coupe faite suivant la ligne brisée II-II de la figure 1, sans les dispositifs de connexion ;

Fig. 3 montre à plus grande échelle (à peu près grandeur nature) et en plan un dispositif de connexion fixe ;

Fig. 4 en montre une coupe faite suivant la ligne IV-IV de la figure 3, le dispositif étant fixé à un tronçon de périphérie de l'enjoliveur et étant engagé dans le bord en canal d'une roue ;

Fig. 5 montre une coupe, correspondante à celle de la figure 4, faite au travers d'un dispositif de connexion mobile, avec l'organe d'engagement disposé dans la position de montage ;

Fig. 6 montre la coupe du dispositif selon la figure 5, telle qu'elle se présente après que l'organe d'engagement a été déplacé de la position de montage à la position de fixation ; et

Figs. 7 et 8 sont deux vues du dispositif selon la figure 6, suivant les flèches VII et respectivement VIII de la même figure 6.

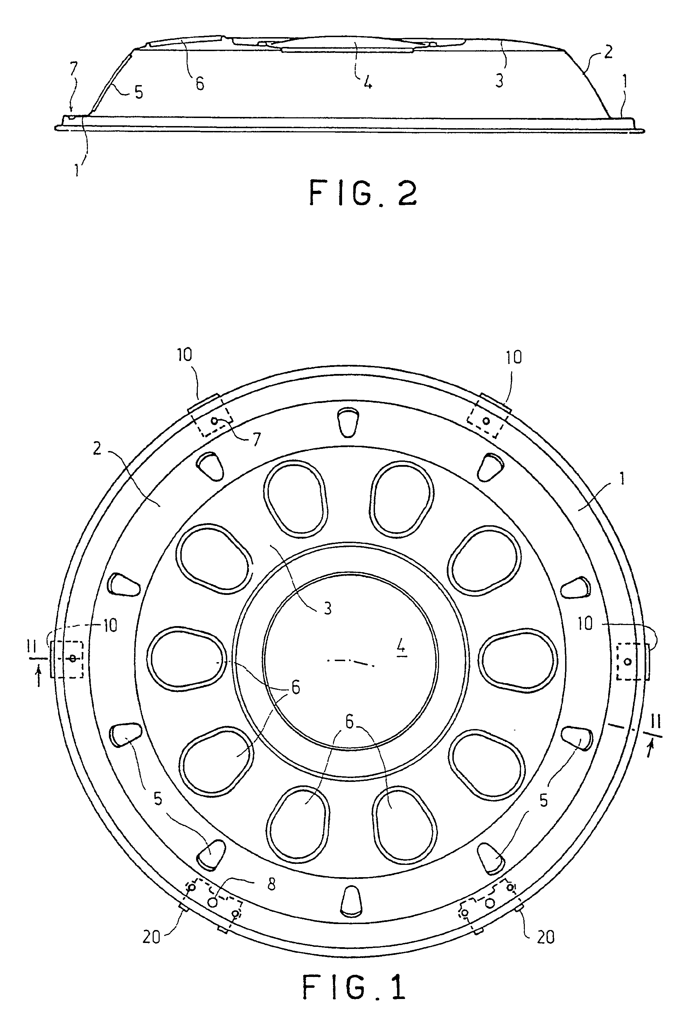

Comme on peut le remarquer par les figures 1 et 2, l'enjoliveur représenté est pourvu d'un bord périphérique 1, destiné à être apposé contre la jante d'une roue, d'une bande en saillie 2 et d'un disque 3 ayant une région centrale 4 qui, d'habitude, est destinée à recevoir une marque ou un ornement. Dans la bande 2 en saillie et dans le disque 3 sont pratiquées nombre d'ouvertures, respectivement 5 et 6, qui en plus d'avoir une raison esthétique assurent le refroidissement du système de freinage de la roue. Le système de fixation selon l'invention concerne seulement le bord périphérique 1 de l'enjoliveur, et de ce fait la conformation de toutes les autres parties de l'enjoliveur est complètement libre et peut être dessinée d'une façon arbitraire, soit dans un but esthétique que pour des raisons techniques. L'on doit donc entendre que la représentation d'une forme particulière d'enjoliveur a seulement un but de démonstration, mais que l'invention peut être appliquée à des enjoliveurs ayant en général toute conformation.

Le système de fixation comprend, dans ce cas, quatre dispositifs de connexion fixes, indiqués en général par 10, et deux dispositifs de connexion mobiles, indiqués en général par 20. Deux dispositifs de connexion fixes 10 sont disposés diamétralement opposés, et les autres deux sont distribués à 60° de distance angulaire réciproque entre les premiers deux, ainsi occupant une moitié de la périphérie de la roue. Comme on le verra mieux plus avant, chacun de ces dispositifs comporte une saillie destinée à engager, par simple insertion, un bord concave en canal présenté par la jante de la roue à laquelle l'enjoliveur doit être appliqué. Comme on le comprend, théoriquement une telle insertion ne serait pas possible géométriquement pour deux dispositifs de connexion 10 diamétralement opposés, mais en effet elle peut être effectuée en général sans aucune difficulté, en raison d'une certaine déformabilité élastique que l'enjoliveur (qui est réalisé en un matériau mince) présente avant d'avoir été complètement fixé. Cependant il est évident que, si dans certains cas particuliers l'on ne peut ou l'on ne veut pas compter sur cette déformabilité élastique, il suffit d'éviter toute disposition diamétralement opposée de deux dispositifs de connexion fixes 10. D'autre côté cette disposition est avantageuse, lors qu'on peut l'adopter, aux fins de la plus grande stabilité de la connexion de l'enjoliveur à la roue.

Les dispositifs de connexion mobiles 20 sont, dans ce cas, en nombre de deux, et ils sont disposés à 60° de distance angulaire entre les dispositifs de connexion fixes 10 diamétralement opposés, de sorte que l'enjoliveur est pourvu en total de six dispositifs de connection, uniformément distribués le long de sa périphérie. Cependant on doit remarquer que cette disposition, particulièrement rationnelle, n'est pas indispensable, et que des distributions non-uniformes peuvent aussi être adoptées, ainsi que des nombres différents de dispositifs de connexion.

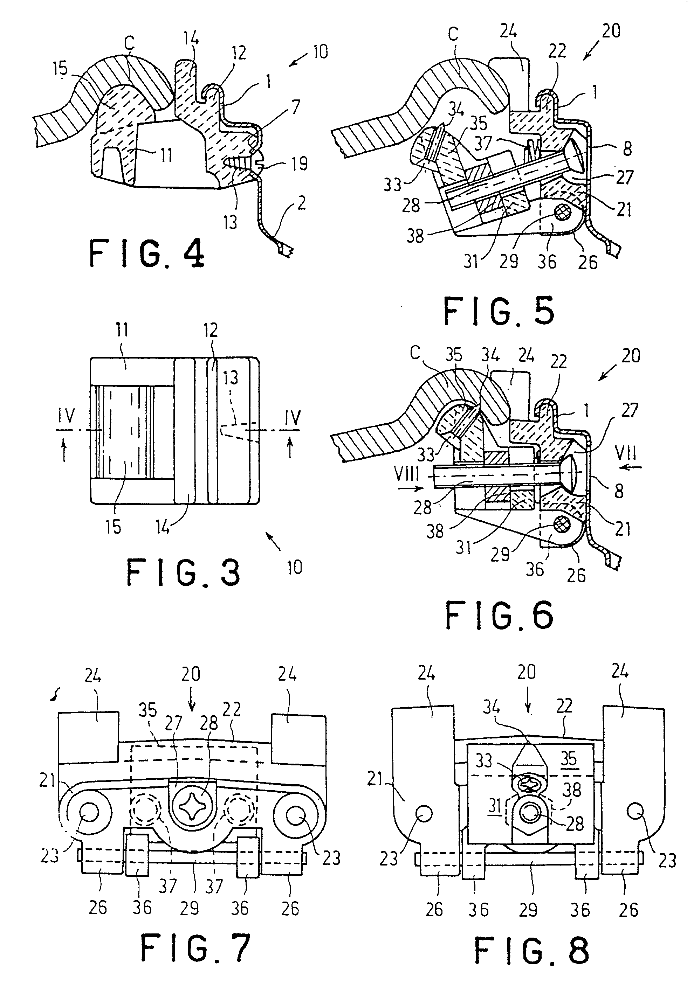

Faisant référence aux figures 3 et 4, chaque dispositif de connexion fixe 10 est constitué par un corps 11, qui peut être moulé en matière plastique, montrant une saillie 12 capable d'engager le bord périphérique 1 (replié vers l'intérieur au dos) de l'enjoliveur, et un trou 13 dans lequel peut être vissée une vis-taraud 19 pour la fixation du dispositif de connexion 10 à l'enjoliveur. Pour permettre le passage de la vis 19, le bord 1 de l'enjoliveur présente, en correspondance de chaque position dans laquelle on doit monter un dispositif de connexion fixe 10, un trou évasé 7. Le dispositif de connexion fixe 10 montre en outre une saillie de protection 14, disposée derrière la saillie 12 et destinée à s'appuyer contre la jante de la roue à laquelle l'enjoliveur est appliqué, et une autre saillie 15 qui est destinée à s'insérer dans le bord concave en canal C par lequel se termine extérieurement la jante de la roue. Comme on le comprend en observant la figure 4, chaque dispositif de connexion fixe 10 est capable d'effectuer une fixation stable et positive de la partie correspondante de la périphérie de l'enjoliveur, lors qu'il a été inséré dans le bord en canal C.

Bien entendu, les moyens 12, 13 et 19 pour la fixation du dispositif de connexion fixe 10 au bord 1 de l'enjoliveur pourraient aussi être réalisés en des formes différentes, lesquelles pourraient éventuellement ne pas exiger que le bord 1 de l'enjoliveur soit replié vers l'intérieur au dos.

Chaque dispositif de connexion mobile 20 (figures 5 à 8) comprend un organe de support 21 et un organe d'engagement 31. L'organe de support 21 peut être moulé en matière plastique, et il est pourvu d'une saillie 22 capable de s'insérer dans le bord périphérique 1 replié vers l'intérieur au dos de l'enjoliveur, et de deux trous 23 dans lesquels on peut visser des vis pour fixer le dispositif 20 au bord 1 de l'enjoliveur en traversant des trous, semblables des trous 7, présentés par le bord lui-même. L'organe de support 21 montre en outre des saillies de protection et d'engagement 24, disposées derrière la saillie 22 et destinées à s'appuyer contre la jante de la roue en accrochant sa périphérie, et deux oreilles 26 dans lesquelles est monté un goujon 29 supportant l'organe mobile d'engagement 31. Enfin, l'organe de support 21 montre deux sièges pour des ressorts dont on dira après, et un siège 27 pour une vis de traction 28, laquelle peut être manoeuvrée au travers d'une ouverture 8 pratiquée, en correspondance de chaque dispositif de connexion mobile 20, dans le bord 1 de l'enjoliveur.

L'organe d'engagement 31, qui peut être lui aussi réalisé en matière plastique, montre deux oreilles 36 par lesquelles il est pivoté sur le goujon 29. Le corps de l'organe 31 contient un écrou métallique 38, dans lequel se visse la vis de traction 28, et il se prolonge en formant une saillie 35 capable d'engager le bord concave en canal C de la roue.

Lors que l'organe d'engagement 31 est écarté par rapport à l'organe de support 21 (figure 5 : position de montage), la saillie 35 se dispose en une position telle à permettre son passage à l'intérieur du bord concave C. De ce fait, quand tous les dispositifs de connexion mobiles se trouvent dans cette condition et les dispositifs de connexion fixes 10 ont été insérés dans le bord en canal C, l'enjoliveur peut être apposé contre la jante dans sa position d'installation.

Lors que l'enjoliveur a été ainsi appliqué l'on manoeuvre la vis de traction 28 en la vissant dans le trou taraudé de l'écrou 38, et alors l'organe d'engagement 31 est tiré vers l'organe de support 21 en tournant autour du goujon 29, et la saillie 35 s'avoisine du bord en canal C jusqu'à l'engager sous pression, comme il est montré par la figure 6. Lors que cette condition a été atteinte par tous les dispositifs de connexion mobiles 20, l'enjoliveur se trouve positivement fixé à la jante de la roue. Il est évident que, par les manoeuvres opposées, l'enjoliveur peut être démonté de la roue d'une façon également facile.

Bien entendu, aussi les moyens de fixation de l'organe de support 21 au bord 1 de l'enjoliveur peuvent être modifiés par rapport à ceux indiqués à titre d'exemple, et la forme de la saillie 35 peut être opportunément choisie en relation à la forme du bord concave C en canal du type de roue auquel l'enjoliveur est destiné. L'emploi d'une vis de traction 28 se vissant dans un écrou 38 est un moyen particulièrement pratique pour commander le passage de l'organe d'engagement de la position de montage à la position de fixation et vice-versa, mais, bien entendu, aussi des moyens différents pourraient être employés à cet effet.

Le nombre total de dispositifs de connexion fixes 10 et mobiles 20, comme déjà dit, peut être modifié suivant les différentes exigences qui se présentent ; en tous cas, pour une fixation efficace l'on doit prévoir en total au moins trois dispositifs de connexion, dont au moins un dispositif de fixation mobile du type 20. De préférence, toutefois, l'on fait usage de trois ou quatre dispositifs de connexion fixes 10 et de deux dispositifs de connexion mobiles 20.

Il est évident que les dispositifs de connexion fixes 10 sont plus économiques que les dispositifs de connexion mobiles 20, et c'est cette raison qui peut suggérer d'adopter des dispositifs de connexion de ces deux types différents. Toutefois on doit entendre que l'on peut omettre du tout les dispositifs de connexion fixes 10 et employer, partout autour du disque enjoliveur, des dispositifs de connexion mobiles 20. Dans ce cas, les dispositifs de connexion, tous de type mobile, doivent être au moins en nombre de trois. Mais de préférence ils sont en nombre de quatre.

De préférence, dans la saillie 35 de l'organe d'engagement 31 est vissée une vis 33 pourvue d'une pointe conique 34 qui dépasse la surface de la saillie 35 vers le bord C en canal de la jante de la roue. Cette pointe 34 s'enfonce légèrement dans le matériau du bord C en canal, ou au moins dans sa vernis, lors que les dispositifs de connexion mobiles 20 sont déplacés dans la position de fixation, comme le montre la figure 6 dans laquelle, toutefois, la grandeur de cet enfoncement est exagérée pour rendre plus claire la représentation. De cette façon l'on obtient une solidarité particulièrement efficace entre l'enjoliveur et la roue et, en particulier, l'on prévient tout déplacement angulaire de l'enjoliveur provoqué par les accélérations et les décélérations de la roue.

Enfin, il est avantageux que deux ressorts 37 (figures 5 et 7) soient disposés en des sièges du corps 21, situés des deux côtés de la vis de traction 28. Ces ressorts, qui sont comprimés par l'organe d'engagement 31 dans sa position de fixation, poussent ensuite ledit organe d'engagement vers la position de montage, ce qui facilite la libération de l'enjoliveur lors qu'on dévisse les vis de traction 28.

## Revendications

1. Système pour la fixation positive d'un disque enjoliveur (1-8) à la jante d'une roue laquelle se termine extérieurement par un bord concave (C) en canal, comprenant au moins trois dispositifs de connexion (10, 20), disposés le long de la périphérie de l'enjoliveur pour engager le bord concave en canal (C) de la jante, au moins un (20) de ces dispositifs de connexion étant mobile et comportant un organe d'engagement (31) ayant une saillie (35) susceptible d'être déplacée entre une position de montage, dans laquelle elle peut être enfilée à l'intérieur dudit bord en canal (C) pour permettre le montage de l'enjoliveur sur la roue, et une position de fixation, dans laquelle elle engage ledit bord en canal (C) pour lui fixer positivement l'enjoliveur, et des moyens (28) pour déplacer ledit organe d'engagement (31) entre la position de montage et la position de fixation et vice-versa, caractérisé en ce que chaque dispositif de connexion mobile (20) comporte un organe de support (21), constructivement séparé de l'enjoliveur (1-8) et pourvu de moyens (22, 23) pour sa fixation au bord (1) de l'enjoliveur, ledit organe d'engagement (31) étant supporté par ledit organe de support (21), et en ce que lesdits moyens pour déplacer l'organe d'engagement (31) comportent une vis de traction (28) montée dans l'organe de support (21) et un écrou (38) solidaire de l'organe d'engagement (31).

2. Système de fixation suivant la revendication 1, caractérisé en ce que ledit organe de support (21) et ledit organe d'engagement (31) de chaque dispositif de connexion mobile (20) sont moulés en matière plastique.

3. Système de fixation suivant la revendication 1, caractérisé en ce que ledit organe de support (21) de chaque dispositif de connexion mobile (20) comporte une saillie (24) susceptible de s'appuyer contre la jante (C) de la roue et d'en accrocher la périphérie.

4. Système de fixation suivant la revendication 1, caractérisé en ce que ledit organe de support (21) de chaque dispositif de connexion mobile (20) comporte, pour sa fixation au bord (1) de l'enjoliveur, une saillie (22) capable d'engager le bord (1) de l'enjoliveur, lequel est replié vers l'intérieur au dos, et une connexion (23) par vis par rapport au bord (1) de l'enjoliveur.

5. Système de fixation suivant la revendication 1, caractérisé en ce que ledit organe de support (21) et ledit organe d'engagement (31) de chaque dispositif de connexion mobile (20) comportent des oreilles d'articulation (26, 36) traversées par un goujon (29).

6. Système de fixation suivant la revendication 1, caractérisé en ce que l'organe d'engagement (31) de chaque dispositif de connexion mobile (20) comprend une vis (33) à pointe conique (34) dépassant la surface de la saillie (35) vers le bord concave (C) en canal de la jante de la roue.

7. Système de fixation suivant la revendication 1, caractérisé en ce que l'organe de support (21) de chaque dispositif de connexion mobile (20) comporte au moins un ressort (37) disposé pour être comprimé par l'organe d'engagement (31) dans sa position de fixation, et pour pousser élastiquement l'organe d'engagement (31) vers sa position de montage.

8. Système de fixation suivant la revendication 1, caractérisé en ce qu'une partie (10) desdits dispositifs de connexion de l'enjoliveur est de type fixe, chaque dispositif de connexion fixe (10) comprenant un corps (11), des moyens (13, 19) pour sa fixation au bord (1) de l'enjoliveur et une saillie (15) capable d'engager le bord concave en canal (C) de la jante de la roue, et lesdits dispositifs de connexion fixes (10) étant disposés en correspondance d'une moitié de la périphérie de l'enjoliveur, de sorte à pouvoir être engagés par simple insertion dans ledit bord concave (C) en canal, et lesdits dispositifs de connexion mobiles (20) étant situés symétriquement du côté de la périphérie de l'enjoliveur opposé auxdits dispositifs de connexion fixes.

9. Système de fixation suivant la revendication 8, caractérisé en ce que chaque dispositif de connexion fixe (10) comprend, pour sa fixation au bord (1) de l'enjoliveur, une saillie (12) capable d'engager le bord (1) de l'enjoliveur, lequel est replié vers l'intérieur au dos, et une connexion par vis (13, 19) par rapport au bord (1) de l'enjoliveur.

10. Système de fixation suivant la revendication 8, caractérisé en ce que lesdits dispositifs de connexion fixes (10) sont en nombre de trois ou quatre, et lesdits dispositifs de connexion mobiles (20) sont en nombre de deux.

11. Système de fixation suivant la revendication 1, caractérisé en ce que tous les dispositifs de connexion sont de type mobile (20), et qu'ils sont au moins en nombre de trois, et de préférence en nombre de quatre.

## Patentansprüche

1. Vorrichtung zur positiven Befestigung einer Radzierkappe (1-8) an einer Radfelge, deren Aussenseite mit einem hohlen rinnenförmigen Rand (C) endet, mit wenigstens drei Verbindungsvorrichtungen (10, 20), die am Umfang der Radzierkappe angeordnet sind, um in den hohlen rinnenförmigen Rand (C) der Felge einzugreifen, wobei wenigstens eine (20) dieser Verbindungsvorrichtungen beweglich ist und ein Eingriffselement (31) mit einem Vorsprung (35), der zwischen einer Montagestellung in der derselbe im Inneren des rinnenförmigen Randes (C) geführt werden kann, um die Montage der Zierkappe am Rad zu ermöglichen, und einer Befestigungsstellung beweglich ist, in der derselbe in den rinnenförmigen Rand (C) eingreift, um die Zierkappe positiv daran zu befestigen, sowie Mittel (28) aufweist, um das Eingriffselement (31) von der Montagestellung zur Befestigungsstellung und umgekehrt zu verschieben, dadurch gekennzeichnet, dass die beweglichen Verbindungsvorrichtungen (20) jeweils ein Stützelement (21) aufweisen, das von der Radzierkappe (1-8) konstruktiv getrennt und mit Mitteln (22, 23) zur Befestigung am Rand (1) der Zierkappe versehen ist, wobei sich das Eingriffselement (31) auf dem Stützelement (21) abstützt, und dass die Mittel zum Verschieben des Eingriffselement aus einer im Stützelement (21) eingebauten Zugschraube (28) und aus einer fest mit dem Eingriffselement (31) verbundenen Mutter (38) bestehen.

2. Befestigungsvorrichtung nach Anspruch 1, dadurch gekennzeichnet, dass das jeweilige Stützelement (21) und das jeweilige Eingriffselement (31) der beweglichen Verbindungsvorrichtungen (20) aus Kunststoff gepresst sind.

3. Befestigungsvorrichtung nach Anspruch 1, dadurch gekennzeichnet, dass das jeweilige Stützelement (21) der beweglichen Verbindungsvorrichtungen (20) einen Wulst (24) aufweist, das in der Lage ist, gegen den Rand (C) des Rades in Anlage zu kommen und in dessen Umfang einzugreifen.

4. Befestigungsvorrichtung nach Anspruch 1, dadurch gekennzeichnet, dass zur Befestigung am Rand (1) der Radzierkappe das jeweilige Stützelement (21) der beweglichen Verbindungsvorrichtungen (20) einen Wulst (22), das in der Lage ist, in dem am Rücken nach Innen umgebogenen Rand (1) der Radzierkappe einzugreifen, und eine Schraubverbindung (23) mit dem Rand (1) der Radzierkappe aufweist.

5. Befestigungsvorrichtung nach Anspruch 1, dadurch gekennzeichnet, dass das jeweilige Stützelement (21) und das jeweilige Eingriffselement (31) der beweglichen Verbindungsvorrichtungen (20) Gelenkansätze (26, 36) aufweisen, durch die eine Achse (29) geführt ist.

6. Befestigungsvorrichtung nach Anspruch 1, dadurch gekennzeichnet, dass das jeweilige Eingriffselement (31) der beweglichen Verbindungsvorrichtungen (20) eine Schraube (33) mit Kegelspitze (34) besitzt, die über die Oberfläche des Wulstes (35) hinaus nach dem hohlen rinnenförmigen Rand (C) der Radfelge hin verläuft.

7. Befestigungsvorrichtung nach Anspruch 1, dadurch gekennzeichnet, dass das jeweilige Stützelement (21) der beweglichen Verbindungsvorrichtungen (20) wenigstens eine Feder (37) aufweist, die so angeordnet ist, dass sie durch das Eingriffselement (31) in Befestigungsstellung gedrückt wird und durch ihre Federkraft das Eingriffselement (31) nach seine Montagestellung drückt.

8. Befestigungsvorrichtung nach Anspruch 1, dadurch gekennzeichnet, dass die Verbindungsvorrichtungen der Radkappe zum Teil (10) einer festen Art sind, wobei die festen Verbindungsvorrichtungen (10) jeweils einen Körper (11), Mittel (13, 19) zur Befestigung desselben am Rand (1) der Radzierkappe und einen Wulst (15) aufweisen, der in den hohlen rinnenförmigen Rand (C) der Radfelge eingreift, wobei diese festen Verbindungsvorrichtungen (10) im Bereich der einen Hälfte des Kappenumfanges so angeordnet sind, dass sie durch einfache Einführung in den hohlen rinnenförmigen Rand (C) in denselben einnreifen, und die beweglichen Verbindungsvorrichtungen (20) symmetrisch an der den festen Verbindungsvorrichtungen gegenüberliegenden Seite des Radkappenumfanges angeordnet sind.

9. Befestigungsvorrichtung nach Anspruch 8, dadurch gekennzeichnet, dass zur Befestigung am Rand (1) der Radzierkappe die festen Verbindungsvorrichtungen (20) jeweils einen Wulst (12) zum Eingriff in den am Rücken nach Innen umgebogenen Rand (1) der Radzierkappe und eine Schraubverbindung (13, 19) mit dem Rand (1) der Radzierkappe aufweisen.

10. Befestigungsvorrichtung nach Anspruch 8, dadurch gekennzeichnet, dass die festen Verbindungsvorrichtungen (10) drei oder vier und die beweglichen Verbindungsvorrichtungen (20) zwei an der Zahl sind.

11. Befestigungsvorrichtung nach Anspruch 1, dadurch gekennzeichnet, dass sämtliche Verbindungsvorrichtungen (20) beweglich sind und wenigstens drei, vorzugsweise vier an der Zahl sind.

## Claims

1. A device for the positive fixing of a cover disk (1-8) to a wheel rim ending outside with a concave channel edge (C), comprising at least three connection devices (10, 20), spaced along the disk periphery in order to engage the concave channel edge (C) of the wheel rim, at least one (20) of said connection devices being movable and comprising an engagement member (31) having a projection (35) displaceable between a mounting position, in which it may pass inside said channel edge (C) of the wheel rim, thus allowing mounting the cover disk onto the wheel, and a fixing position in which it engages said channel edge (C), thus positively fixing thereto the wheel cover disk, and means for displacing said engagement member (31) from the mounting position to the fixing position and vice-versa, characterized in that each movable connection device (20) includes a supporting member (21), constructively separated from the cover disk (1-8) and provided with means (22, 23) for fixing it to the peripheral edge (1) of the cover disk, said engagement member (31) being sustained by said supporting member (21), and in that said means for displacing the engagement member (31) include a traction screw (28) mounted in the supporting member (21) and a nut (38) solid with the engagement member (31).

2. A fixing device as set forth in Claim 1, characterized in that said supporting member (21) and said engagement member (31) of each movable connection device (20) are manufactured of plastics.

3. A fixing device as set forth in Claim 1, characterized in that said supporting member (21) of each movable connection device (20) has a projection (24) suitable for resting against the wheel rim edge (C) and for engaging its periphery.

4. A fixing device as set forth in Claim 1, characterized in that said supporting member (21) of each movable connection device (20) has, for fixing it to the peripheral edge (1) of the cover disk, a projection (22) suitable for engaging the disk edge (1), which edge is inwardly bent at back, and a screw connection (23) to the periphery (1) of the cover disk.

5. A fixing device as set forth in Claim 1, characterized in that said supporting member (21) and said engagement member (31) of each movable connection device (20) are provided with hinge ears (26, 36) through which passes an axle (29).

6. A fixing device as set forth in Claim 1, characterized in that said engagement member (31) of each movable connection device (20) includes a screw (33) with a conical tip (34), which projects over the surface of projection (35) towards the concave channel edge (C) of the wheel rim.

7. A fixing device as set forth in Claim 1, characterized in that said supporting member (21) of each movable connection device (20) has at least one spring (37) arranged to be compressed by said engagement member (31) in the fixing position, and to elastically push said engagement member (31) towards the mounting position.

8. A fixing device as set forth in Claim 1, characterized in that some (10) of said disk connection devices are of a fixed type, each fixed connection device (10) including a body (11), means (13, 19) for fixing it to the peripheral edge (1) of the cover disk and a projection (15) suitable for engaging the concave channel edge (C) of the wheel rim, said fixed connection devices (10) being located in correspondence of a half of the cover disk periphery in order that they may engage said concave channel edge (C) by simple insertion, and said movable connection devices (20) being symmetrically located on the side of the periphery of the cover disk, opposite to said fixed connection devices.

9. A fixing device as set forth in Claim 8, characterized in that each said fixed connection device (10) has, for mounting it onto the cover disk (1), a projection (12) suitable for engaging the peripheral edge (1) of the cover disk, which edge is inwardly bent at back, and a screw connection (13, 19) to the peripheral edge (1) of the cover disk.

10. A fixing device as set forth in Claim 8, characterized in that said fixed connection devices (10) are three or four in number, and said movable connection devices (20) are two in number.

11. A fixing device as set forth in Claim 1, characterized in that all said connection devices are of a movable type (20), and they are at least three in number, and preferably four in number.

FIG. 2

FIG. 1

FIG. 4

FIG. 5

FIG. 3

FIG. 6

FIG. 7

FIG. 8